# FASCICULE DE BREVET EUROPEEN

(11) **EP 3 545 183 B1**
(45) Date de publication et mention de la délivrance du brevet: **08.05.2024**
(21) Numéro de dépôt: 17804630.6
(22) Date de dépôt: 14.11.2017
(51) Int. Cl.: F02K 9/58, B64G 1/40, F03H 1/00

(54) **DISPOSITIF ET PROCÉDÉ DE RÉGULATION DE DÉBIT DE GAZ**
VORRICHTUNG UND VERFAHREN ZUR REGELUNG EINER GASFLUSSRATE
DEVICE AND METHOD FOR REGULATING A GAS FLOW RATE

(30) Priorité: 23.11.2016 FR 1661395
(43) Date de publication de la demande: 02.10.2019
(73) Titulaire: L'AIR LIQUIDE, Société Anonyme pour l'Etude et l'Exploitation des Procédés Georges Claude, 75007 Paris (FR)
(72) Inventeur: MARTIN, François, 38340 Voreppe (FR)
(74) Mandataire: Air Liquide
(86) Numéro de dépôt international: PCT/FR2017/053101
(87) Numéro de publication internationale: WO 2018/096236

(56) Documents cités:
- WO-A1-97/46820
- WO-A1-2016/151251
- FR-A1- 2 697 587
- FR-A1- 2 973 081
- US-A- 5 954 089
- CHO H K ET AL: "Development of hall thruster propulsion system for STSAT-3 application", ACTA ASTRONAUTICA, PERGAMON PRESS, ELMSFORD, GB, vol. 72, 24 October 2011 (2011-10-24), pages 90-97, XP028441844, ISSN: 0094-5765, DOI: 10.1016/J.ACTAASTRO.2011.10.013 [retrieved on 2011-10-28]
- G Matticari ET AL: "New generation Propellant Flow Control components for Electric Propulsion systems: Status of achievements at Alcatel Alenia Space Italia/Laben-Proel; IEPC-2005-23", , 31 October 2005 (2005-10-31), XP055445829, Retrieved from the Internet: URL:http://erps.spacegrant.org/uploads/ima ges/images/iepc_articledownload_1988-2007/ 2005index/023.pdf [retrieved on 2018-01-30]
- Pehrson David M: "Continuing Development of the Proportional Flow Control Valve (PFCV) for Electric Propulsion Systems", , 20 September 2007 (2007-09-20), pages 1-11, XP055890766, 30th international electric propulsion conference, Florence, Italy Retrieved from the Internet: URL:http://electricrocket.org/IEPC/IEPC-20 07-346.pdf [retrieved on 2022-02-11]

## Description

L'invention concerne un dispositif et un procédé de régulation de débit de gaz.

L'invention concerne plus particulièrement un dispositif et un procédé de régulation de débit de gaz destiné à alimenter un appareil de propulsion d'un engin spatial.

L'invention concerne notamment un dispositif de régulation de débit de gaz destiné à alimenter un appareil de propulsion d'un engin spatial comprenant un réservoir de gaz sous pression, notamment du xénon, un circuit fluidique relié au réservoir comprenant une conduite de soutirage comprenant une extrémité amont reliée au réservoir et au moins une extrémité aval destinée à être reliée à un organe de propulsion tel qu'un moteur plasmique, la conduite de soutirage comprenant, disposées en série d'amont en aval, une première vanne d'isolation, une seconde vanne de régulation et un organe de mesure de la pression en aval de la seconde vanne de régulation, la seconde vanne de régulation étant configurée pour assurer une régulation de débit et/ou de pression déterminée en fonction de la pression mesurée par l'organe de mesure de la pression en aval.

Les satellites à propulsion plasmique ont une propulsion utilisant un gaz tel que du xénon. Le flux de gaz régulé alimente deux branches munies chacune d'un orifice calibré pour alimenter respectivement une anode et une cathode du système de propulsion.

Pour obtenir une propulsion satisfaisante un débit précis de gaz doit être fourni aux organes de propulsion.

Un dispositif de régulation de débit connu utilise deux vannes en série : une vanne amont d'isolation normalement fermée (à commande tout ou rien) et une vanne aval de régulation de débit. La vanne aval est une vanne à commande tout ou rien qui est pilotée en pression via un commutateur de pression aval (cf. par exemple le régulateur de la société VACCO (« smart flow control » référence 1302500-01). C'est-à-dire que en fonction de la consigne de pression (ou de débit imposé), le commutateur de pression aval va commander des ouvertures fermetures de la seconde vanne pour réguler la pression et le débit à la consigne. Cette commende tout ou rien est appelée également régulation « bang bang » en anglais.

Cette solution génère cependant des variations de pressions dans le flux de gaz obtenu (de l'ordre de 5% au moins autour de la pression de consigne). De plus cette solution ne permet plus de régulation en cas de défaillance de la vanne pilotée.

Selon une autre configuration connue, deux vannes « tout ou rien » sont disposée en série dans la conduite de soutirage et chacune des branches (anode et cathode) contient une vanne de régulation. Cette solution, outre sont coût important et sa complexité (quatre vannes), ne permet pas de résoudre de façon satisfaisante les problèmes précités.

Les documents FR2973081 A1 et WO97/46820 A1 divulguent des systèmes connus de l'art antérieur.

Un but de la présente invention est de pallier tout ou partie des inconvénients de l'art antérieur relevés ci-dessus.

A cette fin, l'invention propose un dispositif tel que définit par la première revendication.

Par ailleurs, des modes de réalisation de l'invention peuvent comporter l'une ou plusieurs des caractéristiques suivantes :
- le dispositif comprend un organe de mesure de la pression en amont de la première vanne, l'organe électronique d'acquisition de stockage et de traitement de donnée étant configuré pour piloter au moins l'une parmi : la seconde vanne, la première vanne à partir de la valeur mesurée par l'organe de mesure de la pression en amont,
- en cas de défaillance de la seconde vanne, l'organe électronique d'acquisition de stockage et de traitement de donnée est configuré pour piloter la première vanne selon un fonctionnement proportionnel pour réguler le débit de gaz soutiré à un débit et/ou une pression déterminée parmi une pluralité de valeur possibles,
- au moins l'une parmi : la seconde vanne (8), la première vanne est une vanne de régulation proportionnelle activée par effet thermique,
- la vanne de régulation proportionnelle activée par effet thermique est normalement fermée lorsqu'elle n'est pas chauffée au-dessus d'un seuil déterminé, par exemple compris entre 50 et 180°C et de préférence entre 80 et 120°C,
- la vanne de régulation proportionnelle activée par effet thermique comprend un corps définissant une entrée et une sortie pour le gaz et abritant, entre l'entrée et la sortie au moins un et de préférence deux pistons et un obturateur tel qu'un saphir configuré pour interrompre ou permettre un écoulement déterminé de gaz entre l'entrée et la sortie selon la position relative entre l'obturateur et le ou les pistons, le ou les pistons solidaire du corps, le corps extérieur étant muni d'un organe de chauffage, le corps ayant un coefficient de dilatation thermique distinct de celui des pistons pour déplacer les pistons relativement à l'obturateur dans des positions déterminées selon le degré de chauffage du corps afin de réguler le débit de gaz,
- dans un mode non revendiqué, au moins l'une parmi : la seconde vanne, la première vanne est régulée selon une commande proportionnelle intégrale ou proportionnelle intégrale dérivée,
- dans un mode non revendiqué, au moins l'une parmi : la seconde vanne, la première vanne est configurée pour réguler un flux de xénon gazeux entre 0 et 50mg/s et de préférence entre 0 et 20mg/s,
- dans un mode non revendiqué, le circuit fluidique comprend au moins une branche de prélèvement de gaz ayant une extrémité amont raccordée à la conduite de soutirage en amont de la première vanne et une extrémité aval destinée à être raccordée à un utilisateur de gaz, la branche de prélèvement comprenant au moins une vanne,
- dans un mode non revendiqué, la vanne de la au moins une branche de prélèvement est une vanne proportionnelle du type « PCV » à débit variable piloté électriquement,
- dans un mode non revendiqué, le dispositif comprend un organe de mesure de la température en amont de la première vanne, l'organe électronique d'acquisition de stockage et de traitement de donnée étant configuré pour piloter au moins l'une parmi : la seconde vanne, la première vanne à partir de la valeur mesurée par l'organe de mesure de la température en amont,
   - dans un mode non revendiqué, le dispositif comprend un organe de mesure de la température en aval de la seconde vanne de régulation, au moins la seconde vanne de régulation étant configurée pour assurer une régulation de débit et/ou de pression déterminée en fonction de la température mesurée par l'organe de mesure de la température en aval.

L'invention concerne également un procédé d'alimentation en xénon d'un appareil propulsion d'un engin spatial selon la revendication 7.

D'autres particularités et avantages apparaîtront à la lecture de la description ci-après, faite en référence aux figures dans lesquelles :
- la figure 1 représente une vue schématique et partielle illustrant un premier exemple de structure et de fonctionnement d'un dispositif de régulation selon l'invention,
- la figure 2 représente une vue schématique et partielle illustrant un second exemple de structure et de fonctionnement d'un dispositif de régulation selon l'invention,
- la figure 3 représente une vue en coupe, schématique et partielle, illustrant un exemple de structure et de fonctionnement d'une vanne qui peut être utilisée dans le dispositif de régulation selon l'invention.

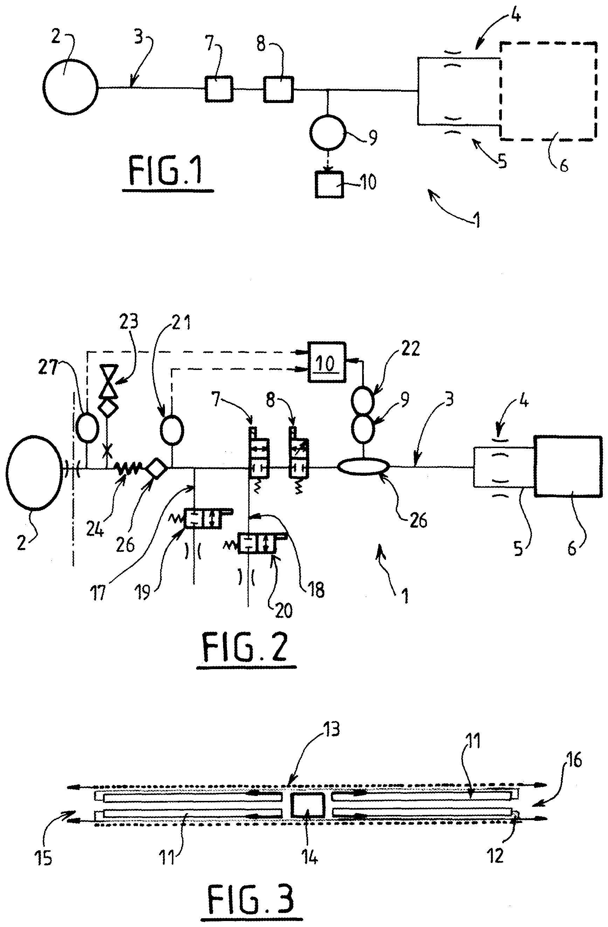

Le dispositif 1 de régulation de débit de gaz illustré aux figures 1 et 2 est destiné à alimenter un appareil de propulsion d'un engin spatial. Ce dispositif comprend classiquement un réservoir 2 de gaz sous pression, par exemple du xénon, à une pression comprise notamment entre quelques bar et 200 bar.

Le dispositif comprend une conduite 3 de soutirage comprenant une extrémité amont reliée au réservoir 2 et une extrémité aval 4, 5 destinée à être reliée à l'organe 6 de propulsion. Plus précisément, l'extrémité aval peut se subdiviser en deux lignes 4, 5 parallèles reliées respectivement à l'alimentation de l'anode et de la cathode du système de propulsion. Ces deux lignes 4, 5 comportent chacune de préférence uniquement un orifice calibré et aucun système de vanne pilotée.

La conduite 3 de soutirage comporte en amont des deux lignes 4, 5 un système de vannes 7, 8 pour réguler le débit de gaz. En particulier me dispositif 1 comprend une première vanne 7 d'isolation et une seconde vanne 8 de régulation. En aval de la seconde vanne 8 de régulation le dispositif comprend un organe 9 de mesure de la pression (tel qu'un transducteur de pression) en aval de la seconde vanne 8 de régulation. Cette seconde vanne 8 de régulation est configurée pour assurer une régulation de débit et/ou de pression déterminée en fonction de la pression mesurée par l'organe 9 de mesure de la pression en aval.

Selon une particularité avantageuse, la seconde vanne 8 de régulation est constituée d'une vanne proportionnelles du type « PCV » à débit variable piloté électriquement.

Par exemple, le dispositif comprend un organe 10 électronique d'acquisition de stockage et de traitement de donnée configuré pour piloter la seconde vanne 8 (et éventuellement la première vanne 7 également), à partir de la valeur mesurée par l'organe 9 de mesure de la pression en aval.

De préférence, la seconde vanne 8 est pilotée selon un fonctionnement proportionnel (notamment proportionnel intégrale dérivé « PID »). C'est-à-dire le l'ouverture variable de la seconde vanne est commandé pour atteindre une consigne déterminée de pression et/ou de débit massique (par exemple respectivement un à deux bar et 1,2 à 2 mg/s).

L'organe 10 électronique d'acquisition de stockage et de traitement de donnée comprend par exemple un microprocesseur et peut être un automate, un ordinateur ou tout autre appareil approprié. Cette logique électronique de commande de la vanne 8 peut par exemple être intégrée à la vanne 8 ou localisée dans un appareillage distinct.

Selon cette configuration, lorsqu'un niveau de pression est régulé (par exemple la pression en aval de la seconde vanne 8 est maintenue à 1,8bar. Ce mode de régulation permet que maintenir cette pression consigne avec une très bonne précision et stabilité (par exemple 1% au plus de fluctuation).

De préférence, cette la vanne 8 est une vanne de régulation proportionnelle activée par effet thermique (cf. par exemple l'exemple du document EP1204906A1). Par exemple, la vanne 8 est normalement fermée lorsqu'elle n'est pas chauffée au-dessus d'un seuil déterminé, par exemple compris entre 50 et 180°C et de préférence entre 80 et 120°C et la consigne de chauffage permet de régler le degré d'ouverture pour modifier le débit de gaz.

Par exemple, et comme illustré à la figure 3, la vanne 8 de régulation proportionnelle activée par effet thermique peut comprendre un corps 12 définissant une entrée 15 et une sortie 16 pour le gaz. Le corps 12 abrite entre l'entrée 15 et la sortie 16 au moins un et de préférence deux pistons 11 tubulaires et un obturateur 14 tel qu'un saphir disposé entre les deux pistons 11. L'obturateur 14 est configuré pour interrompre ou permettre un écoulement déterminé de gaz entre l'entrée 15 et la sortie 16 au travers des pistons 11 selon la position relative entre l'obturateur 14 et les pistons 11.

Les pistons 11 sont solidaires du corps 12 (par exemple par soudage aux deux extrémités du corps). Le corps 12 extérieur est muni d'un organe 13 de chauffage tel qu'une résistance enroulée autour du corps 12. Le corps 12 (inox ou inconel par exemple) a un coefficient de dilatation thermique distinct de celui des pistons 11 (par exemple en alliage de fer tel que de l'INVAR).

La vanne 8 est normalement (sans chauffage) fermée. Dans cette position les pistons 11 sont en contact étanche avec l'obturateur 14. L'ouverture est réalisée par chauffage de la résistance 13. Ce chauffage provoque une dilatation du corps 12 qui est plus importante que la dilatation des pistons 11 et de l'obturateur 14. Les pistons 11 sont alors séparés de l'obturateur 14 (écartement par rapport à l'obturateur selon le sens des flèches de la figure 3).

Par exemple, une puissance de 2W et un courant de 300mA peuvent être suffisants pour ce contrôle par chauffage. Les températures typiques requises pour ouvrir et assurer la régulation de cette ouverture peuvent être choisies en fonction des paramètres de fabrication de la vanne. Sans que ceci soit limitatif, ces températures peuvent être comprises par exemple entre 80 et 120°C.

Cette vanne 8 peut recevoir à son entrée du gaz à une pression de l'ordre de 200bar par exemple.

Ce type de vanne a un faible encombrement (masse de cinq grammes et longueur de l'ordre de deux centimètres) est particulièrement bien adaptée à réguler un débit de gaz par exemple entre zéro et 20mg/s via un système de pilotage du type PID. La grandeur physique pilotée de façon PID pour réguler la pression/le débit peut être le courant électrique qui alimente la résistance de chauffage de la vanne 8.

Selon une particularité avantageuse, de préférence la première vanne 7 d'isolation peut être également constituée d'une vanne proportionnelle du type « PCV » à débit variable piloté électriquement (et en particulier du même type que la seconde vanne 8).

Ainsi, en l'absence de défaillance de la seconde vanne 8, la première vanne 7 peut être pilotée selon un fonctionnement tout ou rien c'est-à-dire que la première vanne 7 est commutée uniquement entre deux configurations : ouverture totale et fermeture totale. En revanche, en cas de défaillance de la seconde vanne 8 (fermeture impossible par exemple) la première vanne 7 peut être pilotée selon un mode proportionnel pour réguler le débit de gaz soutiré à un débit et/ou une pression déterminée parmi une pluralité de valeur possibles. De cette façon, la première vanne 7 peut former une solution de redondance de la fonction de régulation de débit.

Comme illustré plus en détail à la figure 2, la conduite 3 de soutirage peut comporter en amont de la première vanne 7 au moins l'un parmi : un capteur 27 de température amont, une conduite munie d'un raccord 23 de remplissage du réservoir 2, un élément 24 de réchauffage du gaz, un filtre 26, un capteur 21 de pression amont. A noter que, comme symbolisé à la figure 2 par une croix sur la ligne de remplissage, après le remplissage du réservoir 2 le dispositif de remplissage peut être retiré et la ligne de remplissage peut être scellée (dans le cas d'un usage unique).

De plus, le circuit fluidique peut comprendre deux branche 17, 18 de prélèvement de gaz ayant une extrémité amont raccordée à la conduite 3 de soutirage en amont de la première vanne 7 et une extrémité aval destinée à être raccordée à un utilisateur de gaz (par exemple pour alimenter respectivement une application ou un système de passivation d'engin spatial par exemple). Chaque branche 17, 18 de prélèvement comprend une vanne 19, 20 d'isolation qui peut également être du même type que la second vanne 8 décrite ci-dessus (vanne à ouverture proportionnelle utilisée en mode tout ou rien).

En aval de la seconde vanne 8 et en amont des deux lignes 4, 5, la conduite 3 de soutirage comprend de préférence un plénum 26, c'est-à-dire un volume tampon pour stabiliser la pression et le flux de gaz qui sert de référence pour le contrôle de la vanne 8.

Ce plénum 26 a de préférence un volume réduit, par exemple un volume inférieur à 2cm³. Ce plénum 26 peut être formé si besoin uniquement par un élargissement localisé de la conduite 3 de soutirage. De préférence la mesure 9 de pression aval est réalisée au niveau du plénum 26. De même, une mesure 22 de température aval peut être réalisée à ce niveau.

Comme illustré, la régulation du débit et/ou de la pression via la seconde vanne 8 peut être fonction également de l'un au moins, parmi : la température du gaz mesurée 11 en amont de la première vanne 7, la température du gaz mesurée 22 au niveau du plénum.

La régulation de débit/pression obtenue selon ces configurations permet d'atteindre une précision de l'ordre de 1%. Les exemples de vannes 7, 8 utilisées confèrent une grande fiabilité au dispositif (endurance, précision, ...).

## Revendications

1. Dispositif de régulation de débit de gaz destiné à alimenter un appareil de propulsion d'un engin spatial comprenant un réservoir (2) de gaz sous pression, notamment du xénon, un circuit fluidique relié au réservoir (2) comprenant une conduite (3) de soutirage comprenant une extrémité amont reliée au réservoir (2) et au moins une extrémité aval (4, 5) destinée à être reliée à un organe (6) de propulsion tel qu'un moteur plasmique, la conduite (3) de soutirage comprenant, disposées en série d'amont en aval, une première vanne (7) d'isolation, une seconde vanne (8) de régulation et un organe (9) de mesure de la pression en aval de la seconde vanne (8) de régulation, la seconde vanne (8) de régulation étant configurée pour assurer une régulation de débit et/ou de pression déterminée en fonction de la pression mesurée par l'organe (9) de mesure de la pression en aval, la seconde vanne (8) de régulation étant constituée d'une vanne proportionnelle du type « PCV » à débit variable piloté électriquement, la première vanne (7) d'isolation étant également constituée d'une vanne proportionnelle du type « PCV » à débit variable piloté électriquement, le dispositif comprenant un organe (10) électronique d'acquisition de stockage et de traitement de donnée configuré pour piloter au moins l'une parmi : la seconde vanne (8), la première vanne (7) à partir de la valeur mesurée par l'organe (9) de mesure de la pression en aval, **caractérisé en ce que**, en l'absence de défaillance de la seconde vanne (8), l'organe (10) électronique d'acquisition de stockage et de traitement de donnée est configuré pour piloter la première vanne (7) selon un fonctionnement tout ou rien c'est-à-dire que la première vanne (7) est commutée uniquement entre deux configurations : ouverture totale et fermeture totale, et **en ce que** l'organe (10) électronique d'acquisition de stockage et de traitement de donnée est configuré pour piloter la seconde vanne (8) selon un fonctionnement proportionnel, c'est-à-dire selon une pluralité de degré d'ouverture possible pour réguler le débit de gaz soutiré à un débit et/ou une pression déterminée parmi une pluralité de valeur possibles.

2. Dispositif selon la revendication précédente, **caractérisé en ce qu'**il comprend un organe (27) de mesure de la pression en amont de la première vanne (7) et **en ce que** l'organe (10) électronique d'acquisition de stockage et de traitement de donnée est configuré pour piloter au moins l'une parmi : la seconde vanne (8), la première vanne (7) à partir de la valeur mesurée par l'organe (27) de mesure de la pression en amont.

3. Dispositif selon l'une quelconque des revendications précédentes, **caractérisé en ce que**, en cas de défaillance de la seconde vanne (8), l'organe (10) électronique d'acquisition de stockage et de traitement de donnée est configuré pour piloter la première vanne (7) selon un fonctionnement proportionnel pour réguler le débit de gaz soutiré à un débit et/ou une pression déterminée parmi une pluralité de valeur possibles.

4. Dispositif selon l'une quelconque des revendications précédentes, **caractérisé en ce qu'**au moins l'une parmi : la seconde vanne (8), la première vanne (7) est une vanne de régulation proportionnelle pilotée électriquement par activation par effet thermique.

5. Dispositif selon la revendication précédente, **caractérisé en ce que** la vanne de régulation proportionnelle activée par effet thermique est normalement fermée lorsqu'elle n'est pas chauffée au-dessus d'un seuil déterminé, par exemple compris entre 50 et 180°C et de préférence entre 80 et 120°C.

6. Dispositif selon la revendication 4 ou 5, **caractérisé en ce que** la vanne (7, 8) de régulation proportionnelle activée par effet thermique comprend un corps (12) définissant une entrée (15) et une sortie (16) pour le gaz et abritant, entre l'entrée (15) et la sortie (16) au moins un et de préférence deux pistons (11) et un obturateur (14) tel qu'un saphir configuré pour interrompre ou permettre un écoulement déterminé de gaz entre l'entrée (15) et la sortie (16) selon la position relative entre l'obturateur (14) et le ou les pistons (11) solidaire du corps (12), le corps (12) extérieur étant muni d'un organe (13) de chauffage, le corps (12) ayant un coefficient de dilatation thermique distinct de celui des pistons (11) pour déplacer les pistons (11) relativement à l'obturateur (14) dans des positions déterminées selon le degré de chauffage du corps (12) afin de réguler le débit de gaz.

7. Procédé d'alimentation en xénon d'un appareil propulsion d'un engin spatial au moyen d'un dispositif de régulation de débit conforme à l'une quelconque des revendications précédentes, dans lequel un flux de gaz est transféré du réservoir (2) à l'extrémité aval de la conduite (3) de soutirage à un niveau de pression et/ou de débit déterminé via un pilotage proportionnel de la seconde vanne (8) de régulation par rapport à la valeur de pression mesurée par l'organe (9) de mesure de la pression en aval.

## Patentansprüche

1. Vorrichtung zur Gasdurchsatzregelung, die dazu bestimmt ist, ein Antriebsgerät eines Raumfahrzeugs anzutreiben, umfassend einen Behälter (2) für unter Druck stehendes Gas, insbesondere Xenon, einen mit dem Behälter (2) verbundenen Fluidkreislauf, der eine Entnahmeleitung (3) umfasst, die ein mit dem Behälter (2) verbundenes stromaufwärtiges Ende und mindestens ein stromabwärtiges Ende (4, 5) umfasst, das dazu bestimmt ist, mit einem Antriebsorgan (6) wie einem Plasmamotor verbunden zu sein, wobei die Entnahmeleitung (3), von stromabwärts nach stromaufwärts hintereinander angeordnet, ein erstes Absperrventil (7), ein zweites Regelventil (8) und ein Organ (9) zum Messen des Drucks stromabwärts des zweiten Regelventils (8) umfasst, wobei das zweite Regelventil (8) dazu konfiguriert ist, eine bestimmte Durchsatz- und/oder Druckregelung in Abhängigkeit von dem durch das stromabwärtige Druckmessorgan (9) gemessenen Druck zu gewährleisten, wobei das zweite Regelventil (8) aus einem Proportionalventil des Typs "PCV" mit elektrisch gesteuertem variablem Durchsatz gebildet ist, wobei das erste Absperrventil (7) ebenfalls aus einem Proportionalventil des Typs "PCV" mit elektrisch gesteuertem variablem Durchsatz gebildet ist, wobei die Vorrichtung ein elektronisches Organ (10) zur Erfassung, Speicherung und Verarbeitung von Daten umfasst, das dazu konfiguriert ist, anhand des vom stromabwärtigen Druckmessorgan (9) gemessenen Wertes mindestens eines des zweiten Ventils (8) und des ersten Ventils (7) zu steuern, **dadurch gekennzeichnet, dass** bei Abwesenheit eines Ausfalls des zweiten Ventils (8) das elektronische Organ (10) zur Datenerfassung, -speicherung und -verarbeitung dazu konfiguriert ist, das erste Ventil (7) gemäß einem Ein-/Aus-Betrieb zu steuern, d. h. dass das erste Ventil (7) nur zwischen zwei Konfigurationen umgeschaltet wird: vollständig geöffnet und vollständig geschlossen, und dass das elektronische Organ (10) zur Datenerfassung, -speicherung und -verarbeitung dazu konfiguriert ist, das zweite Ventil (8) gemäß einem Proportionalbetrieb zu steuern, d. h. gemäß einer Vielzahl möglicher Öffnungsgrade, um den Durchsatz des entnommenen Gases auf einen Durchsatz und/oder einen Druck zu regeln, der aus einer Vielzahl möglicher Werte bestimmt wird.

2. Vorrichtung nach dem vorangehenden Anspruch, **dadurch gekennzeichnet, dass** es ein Organ (27) zur Messung des Drucks stromaufwärts des ersten Ventils (7) umfasst und dass das elektronische Organ (10) zur Datenerfassung, -speicherung und -verarbeitung dazu konfiguriert ist, anhand des durch das Organ (27) zur Messung des stromaufwärtigen Drucks gemessenen Werts mindestens eines des zweiten Ventils (8) und des ersten Ventils (7) zu steuern.

3. Vorrichtung nach einem der vorangehenden Ansprüche, **dadurch gekennzeichnet, dass** bei einem Ausfall des zweiten Ventils (8) das Organ (10) zur Datenerfassung, - speicherung und -verarbeitung dazu konfiguriert ist, das erste Ventil (7) gemäß einem Proportionalbetrieb zu steuern, um den Durchsatz des entnommenen Gases auf einen Durchsatz und/oder einen Druck zu regeln, der aus einer Vielzahl möglicher Werte bestimmt wird.

4. Vorrichtung nach einem der vorangehenden Ansprüche, **dadurch gekennzeichnet, dass** mindestens eines des zweiten Ventils (8) und des ersten Ventils (7) ein Proportionalregelventil ist, das durch Aktivierung durch thermische Wirkung elektrisch gesteuert wird.

5. Vorrichtung nach dem vorangehenden Anspruch, **dadurch gekennzeichnet, dass** das durch Aktivierung durch thermische Wirkung gesteuerte Proportionalregelventil normalerweise geschlossen ist, wenn es nicht über einen bestimmten Schwellenwert hinaus erwärmt wird, der beispielsweise zwischen 50 und 180 °C und vorzugsweise zwischen 80 und 120 °C liegt.

6. Vorrichtung nach Anspruch 4 oder 5, **dadurch gekennzeichnet, dass** das durch thermische Wirkung aktivierte Proportionalregelventil (7, 8) einen Körper (12) umfasst, der einen Einlass (15) und einen Auslass (16) für das Gas definiert und zwischen dem Einlass (15) und dem Auslass (16) mindestens einen und vorzugsweise zwei Kolben (11) und einen Verschluss (14) wie einen Saphir aufnimmt, der dazu konfiguriert ist, einen bestimmten Gasstrom zwischen dem Einlass (15) und dem Auslass (16) gemäß der Relativposition zwischen dem Verschluss (14) und dem bzw. den fest mit dem Körper (12) verbundenen Kolben (11) zu unterbrechen oder zuzulassen, wobei der äußere Körper (12) mit einem Heizorgan (13) ausgestattet ist, wobei der Körper (12) einen Wärmeausdehnungskoeffizient aufweist, der sich von dem der Kolben (11) unterscheidet, um die Kolben (11) gemäß dem Grad der Erwärmung des Körpers (12) in bestimmte Positionen relativ zum Verschluss (14) zu bewegen, um den Gasdurchsatz zu regeln.

7. Verfahren zur Versorgung eines Antriebsgeräts eines Raumfahrzeugs mit Xenon mithilfe einer Vorrichtung zur Durchsatzregelung nach einem der vorangehenden Ansprüche, wobei ein Gasstrom vom Behälter (2) zum stromabwärtigen Ende der Entnahmeleitung (3) mit einem bestimmten Druck- und/oder Durchsatzniveau über eine proportionale Steuerung des zweiten Regelventils (8) in Bezug auf den durch das stromabwärtige Druckmessorgan (9) gemessenen Druckwert übertragen wird.

## Claims

1. Gas flow rate regulation device intended to supply a propulsion device of a spacecraft comprising a tank (2) of pressurised gas, notably xenon, a fluidic circuit connected to the tank (2) comprising a draw-off line (3) comprising an upstream end connected to the tank (2) and at least one downstream end (4, 5) intended to be connected to a propulsion member (6) such as a plasma engine, the draw-off line (3) comprising, arranged in series from upstream to downstream, a first isolation valve (7), a second regulation valve (8) and a member (9) for measuring the pressure downstream of the second regulation valve (8), the second regulation valve (8) being designed to regulate the flow rate and/or pressure determined as a function of the pressure measured by the downstream pressure measurement member (9), the second regulation valve (8) being an electrically controlled variable-flow-rate PCV proportioning valve, the first isolation valve (7) also being an electrically controlled variable-flow-rate PCV proportioning valve, the device comprising an electronic data acquisition, storage and processing member (10) configured to control at least one of the second valve (8) and the first valve (7) on the basis of the value measured by the downstream pressure measurement member (9), **characterized in that**, in the absence of failure of the second valve (8), the electronic data acquisition, storage and processing member (10) is configured to control the first valve (7) using all-or-nothing operation, i.e. the first valve (7) is switched only between two states: fully open and fully closed, and **in that** the electronic data acquisition, storage and processing member (10) is configured to control the second valve (8) using proportional operation, i.e. using a plurality of possible degrees of openness to regulate the draw-off gas flow rate at a flow rate and/or pressure determined from a plurality of possible values.

2. Device according to the preceding claim, **characterized in that** it comprises a member (27) for measuring the pressure upstream of the first valve (7) and **in that** the electronic data acquisition, storage and processing member (10) is configured to control at least one of the second valve (8) and the first valve (7) on the basis of the value measured by the upstream pressure measurement member (27).

3. Device according to any one of the preceding claims, **characterized in that**, in the event of failure of the second valve (8), the electronic data acquisition, storage and processing member (10) is configured to control the first valve (7) using proportional operation to regulate the draw-off gas flow rate at a flow rate and/or pressure determined from a plurality of possible values.

4. Device according to any one of the preceding claims, **characterized in that** at least one of the second valve (8) and the first valve (7) is a proportioning regulation valve controlled electrically by thermal effect activation.

5. Device according to the preceding claim, **characterized in that** the proportioning regulation valve activated by thermal effect is normally closed when not heated above a given threshold, for example between 50°C and 180°C, and preferably between 80°C and 120°C.

6. Device according to Claim 4 or 5, **characterized in that** the proportioning regulation valve (7, 8) activated by thermal effect comprises a body (12) defining an inlet (15) and an outlet (16) for the gas and housing, between the inlet (15) and the outlet (16), at least one and preferably two pistons (11) and one stopper (14) such as a sapphire designed to interrupt or permit a given flow of gas between the inlet (15) and the outlet (16) depending on the relative position between the stopper (14) and the piston or pistons (11) rigidly connected to the body (12), the external body (12) being provided with a heating member (13), the body (12) having a coefficient of thermal expansion distinct from the coefficient of thermal expansion of the pistons (11) to move the pistons (11) relative to the stopper (14) to positions determined according to the degree of heating of the body (12) in order to regulate the gas flow rate.

7. Method for supplying xenon to a propulsion device of a spacecraft using a flow rate regulation device according to any one of the preceding claims, in which a gas flow is transferred from the tank (2) to the downstream end of the draw-off line (3) at a level of pressure and/or of flow rate determined by proportional control of the second regulation valve (8) in relation to the pressure value measured by the downstream pressure measurement member (9).
